# EUROPEAN PATENT APPLICATION

(11) **EP 0 620 426 A1**
(43) Date of publication of application: **19.10.1994**
(21) Application number: 94105706.9
(22) Date of filing: 13.04.1994
(51) Int. Cl.: G01L 19/00

(54) **Measuring and transmitter device**

(30) Priority: 13.04.1993 FI 930217 U
(71) Applicant: LYTH-INSTRUMENT OY, SF-11130 Riihimäki (FI)
(72) Inventor: Sundholm, Gunnar, SF-00180 Helsinki (FI); Mäntylä, Ensio, SF-28800 Pori (FI)
(74) Representative: Zipse + Habersack

(57) **Abstract**

The invention relates to a measuring and transmitter device comprising a mediating element (1) and a transmitter frame (2) attached to it and provided with a surface pressure transmitter (7). The transmitter is connected to a pressure sensor (6) comprised in the device, and the sensor (6) is connected to a pressure space (4) closed with a protective film (3). The device is provided with a temperature sensor (8) connected to an element which understands the output signal given by the temperature sensor, e.g. a temperature transmitter (10).

## Description

The present invention relates to a measuring and transmitter device as defined in the preamble of claim 1, designed for use in industrial measuring technology.

Among the devices used for industrial measuring purposes in previously known technology there are devices which measure the surface pressure and transmit the measurement results in the form of signals for further processing, e.g. to a system control unit. Previously known are also separate temperature measuring devices which transmit the results as signals for further processing. Certain known devices for the measurement of surface pressure have some internal functions, e.g. for the calibration of the meter, measurement of temperature. However, these devices do not output the temperature value for further processing.

A problem with the use of two separate measuring devices is that they occupy a larger space and separate measurement connections to the object under measurement have to be provided for each device. In addition, expensive cables and piping have to be installed separately for each measuring device. Previously known temperature sensors are also in direct contact with the substance under measurement, so that e.g. in the case of corrosive substances, temperature sensors specially designed for this purpose have to be used, which are very expensive (3000 - 8000Fmk / unit). Another drawback with current temperature measuring devices is that, due to their construction, they are slow in operation.

The combined diaphragm temperature / surface pressure measuring device of the present invention is designed to eliminate the drawbacks referred to above and to achieve a reliable, simple and cheap device for the measurement, of the temperature and surface pressure of an object and for transmitting the measurement results for further processing. The transmitter device of the invention is characterized by what is presented in the characterization part of claim 1. The invention has the advantage that only one measurement connection to the object under measurement, e.g. a container, is needed, instead of two as required before. This reduces the costs and the space needed. Further savings can be achieved in the costs of the ducts and cabling. The temperature sensor is placed under a protective diaphragm, ensuring a long useful life and a good resistance to corrosive substances. A further advantage as compared to traditional temperature sensors is that the device of the invention is faster in operation.

In the following, the invention is described in detail by the aid of an example of its embodiments by referring to the attached drawings, in which
- Fig. 1: presents the transmitter part of the measuring device in front view, and
- Fig. 2: presents the measuring device of Fig. 1 partly sectioned and as seen from one end of the transmitter part.

The measuring/transmitter device of the invention has a mounting flange 1 acting as a mediating element, which is attached to the object to be measured by means of screws placed in mounting holes 14 provided in the flange 1. The bottom surface of the mounting flange, i.e. the surface which is placed against the substance to be measured, is provided with a ring-shaped cut-out 4 placed centrically with respect to the centre axis of the flange and closed below by means of a tantalum film 3 acting as a protective membrane. From the ring-shaped cut-out 4, a bore 5 extends through the flange 1 to its upper surface. Mounted on the upper surface of the flange, directly above the bore 5, is a pressure sensor 6. The ring-shaped cut-out 4 and the bore 5 are filled with oil, which transfers the pressure from the tantalum film 3 to the pressure sensor 6.

In the bottom surface of the flange 1, in the middle of the ring-shaped cut-out, there is a conical cut-out 16 placed centrically with respect to the centre axis of the flange, with a bore 9 leading from the upper part of the conical cut-out through the flange 1 to its top surface. Placed in the conical cut-out is a diaphragm temperature sensor 8, which is isolated from the ring-shaped cut-out 4 by means of a protective membrane 17.

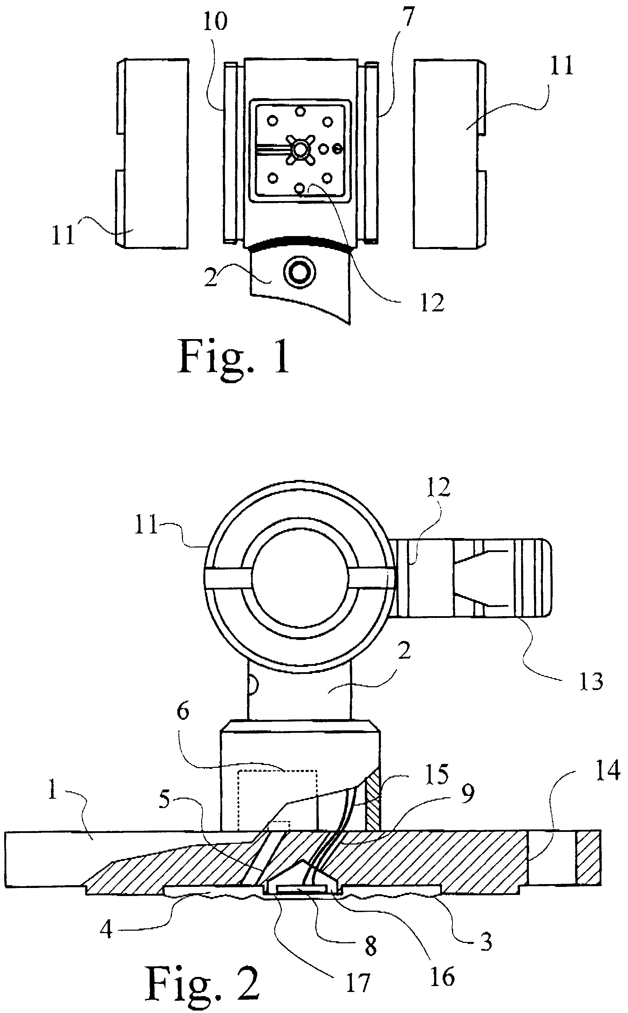

Placed centrically with respect to the centre axis of the flange, the lower end of the hollow frame 2 of the transmitter part is attached to the top surface of the flange 1 so that both the pressure sensor 6 and the bore 9 are enclosed inside the lower end of the frame. Mounted inside the upper end of the frame are a surface pressure transmitter 7 and a temperature transmitter 10. Each of the transmitters is protected by a cover 11 provided with a thread, these protective covers 11 being open in Fig 1. The temperature sensor 8 is connected to the temperature transmitter via conductors 15 passed through the flange via bore 9. Similarly, the pressure sensor is connected to the surface pressure transmitter via conductors placed inside the frame 2. Both the surface pressure transmitter and the temperature transmitter are further connected to one and the same connecting box 12 attached to the frame and providing separate output signals for temperature and surface pressure. By plugging a connecting cable with a connector 13 into the connecting box 12, the output signals can be connected further to external processing equipment.

It is obvious to a person skilled in the art that the invention is not restricted to the example described above, but that its embodiments may be varied within the scope of the claim presented below. Thus, the temperature sensor need not necessarily be isolated with a protective membrane from the oil space 4, but instead it is possible to use an oil-resistant sensor placed directly in the oil space. In this case the lead-through of the conductors 15 must be such that it can withstand the prevailing oil pressure. Moreover, the rest of the constructional aspects of the device may also differ considerably from the embodiment presented above as an example.

## Claims

1. Measuring and transmitter device comprising a mediating element (1), a transmitter frame (2) attached to said element and provided with a surface pressure transmitter (7) connected to a pressure sensor (6) comprised in the device, said sensor (6) being connected to a pressure space (4) which is closed with a protective film (3), **characterized** in that the device is provided with a temperature sensor (8) connected to an element, e.g. a temperature transmitter (10), which understands the output signal given by the temperature sensor.
